# EUROPÄISCHE PATENTSCHRIFT

(11) **EP 1 627 571 B1**
(45) Veröffentlichungstag und Bekanntmachung des Hinweises auf die Patenterteilung: **23.01.2008**
(21) Anmeldenummer: 05012983.2
(22) Anmeldetag: 16.06.2005
(51) Int. Cl.: A23L 1/00, A01K 5/01, A01K 13/00, A61K 9/00, A23K 1/16

(54) **Nahrungsergänzungsmittelabgabevorrichtung**
Device for the administration of dietary supplements
Dispositif pour l'administration de compléments nutritionnels

(30) Priorität: 09.08.2004 DE 102004038672
(43) Veröffentlichungstag der Anmeldung: 22.02.2006
(73) Patentinhaber: Gebrüder Holzapfel GmbH & Co. KG, 37276 Meinhard-Frieda (DE)
(72) Erfinder: Derin-Holzapfel, Désirée, 37308 Volkerode (DE)
(74) Vertreter: Schwabe - Sandmair - Marx

(56) Entgegenhaltungen:
- EP-A- 0 993 773
- DE-U1- 29 909 112
- GB-A- 2 386 069
- US-A- 2 086 631
- US-A- 5 819 690
- US-A- 5 832 877
- US-A- 5 865 147
- US-A1- 2002 115 377

## Beschreibung

Die Erfindung betrifft eine Vorrichtung und ein Verfahren zur Abgabe eines Nahrungsergänzungsmittels, insbesondere zur Anregung des Spieltriebs von Tieren bei gleichzeitiger Abgabe eines Produkts oder von Bestandteilen des Produkts, das in der Vorrichtung enthalten ist.

Es ist bekannt, Nahrungsergänzungsmittel als Futterzugaben einem Tierfutter beizumischen. Hierzu gibt es beispielsweise Futterpräparate, die bereits ein Nahrungsergänzungsmittel enthalten. Da Tierfutter in der Regel in großen Gebinden abgepackt ist, müssen für verschiedene selektive Nahrungsergänzungsmittel jeweils große Gebinde vorgehalten werden. Dies kostet zum einen Lagerfläche und zum anderen besteht die Gefahr, dass das Futter verdirbt. Es besteht ferner die Möglichkeit, dem Futter die gewünschten Nahrungsergänzungsmittel je nach Bedarf beizumischen.

Eine weitere Möglichkeit zur Verabreichung von Nahrungsergänzungsmittel stellt ein am Futterplatz befestigter Leckstein dar, bei dem Tiere durch Ablecken das Nahrungsergänzungsmittel aufnehmen.

Ferner können Nahrungsergänzungsmittel durch Injektion in den Tierkörper verabreicht werden. Das Verabreichen eines Produkts in einen Tierkörper durch Injektion kann jedoch nur durch Fachpersonal vorgenommen werden, was zu relativ hohen Kosten führt.

Aus der DE 299 09 112 U1 ist ein Futter- und Spielgefäß für Tiere bekannt. Es wird offenbart, Futter in ein Hohlgefäß zu füllen, welches mit einer oder mehreren durchgehenden Wandöffnungen versehen ist. Wird das Hohlgefäß von dem Tier bewegt, wird das Futter in dosierter Form durch die Wandöffnungen freigegeben. Hierdurch werden das Tier beschäftigt und die Futteraufnahme der natürlichen Futteraufnahme angenähert, da sie über einen längeren Zeitraum ausgedehnt wird.

Die EP 0 993 773 A2 beschreibt ein Spielzeug für Tiere, welches hohl ist und Öffnungen aufweist, aus denen eine sich im Inneren des Spielzeugs befindliche Leckerei austreten kann, um beispielsweise ein Tier, insbesondere einen Hund, eine Katze und/oder Kleinsäuger, zu belohnen.

Die US 2002/0115377 A1 offenbart ein Spielzeug für ein Haustier (oder Kind) welches Töne aufnehmen und wiedergeben kann und welches Leckereien oder andere gewünschte Gegenstände abgeben kann. Das Spielzeug weist ein Gehäuse auf, das einen Innenraum und eine Außenoberfläche bildet. Im Innenraum sind von dem Spielzeug abgebbare Leckereien gelagert. Die Leckereien werden durch eine Öffnung des Spielzeugs abgegeben, wenn das Spielzeug von dessen Verwender bewegt wird.

Aus der US 5,819,690 ist ein ballförmiges, eine Leckerei abgebendes Spielzeug bekannt, das als Hohlkörper gebildet ist, der mindestens zwei Öffnungen zu seinem inneren Hohlraum und wenigstens zwei Abweisungsmittel, welche von der inneren Oberfläche des Körpers abragen, aufweist. Das Spielzeug wird mit Leckereien für Tiere, wie zum Beispiel künstlichen Knochen oder anderen harten Objekten aufgefüllt, welche zufällig abgegeben werden, wenn das Spielzeug gerollt wird. Die Abweisungsstrukturen richten die Leckereien aus und ermöglichen deren Bewegung in Richtung der Öffnungen, aus der die Leckereien abgegeben werden.

Schließlich ist aus der US 5,832,877 ein längliches elastomeres Spielzeug für Haustiere bekannt, welches eine längliche Platte aufweist, die erste und zweite Lippen umfasst, die entlang jeweils entgegengesetzter Längskanten der Platte ausgebildet sind. Es werden Taschen gebildet, welche als verformbare hohle Aufnahmen dienen, um eine Leckerei für Tiere aufzunehmen. Wenn das Tier an dem Spielzeug kaut, wird die Leckerei durch den länglichen Schlitz herausgepresst, so dass sie das Tier fressen kann. Das Spielzeug kann offene Stirnseiten aufweisen, durch welche die Leckerei durch das Herrchen des Tiers nachgefüllt werden können.

Der Erfindung liegt die Aufgabe zugrunde, eine Vorrichtung und ein Verfahren zu schaffen, mit welchen die Abgabe eines Produkts wie z.B. eines Nahrungsergänzungsmittels, oder von Bestandteilen des Produkts vereinfacht werden kann.

Die Aufgabe wird durch die Gegenstände der unabhängigen Ansprüche gelöst. Vorteilhafte Weiterentwicklungen ergeben sich aus den Unteransprüchen.

Die Erfindung betrifft eine Vorrichtung zur oralen Verabreichung eines Produkts mit einer bissfesten Umfassung und einem Produkt, das sich innerhalb der Umfassung befindet, wobei die Umfassung so ausgebildet ist, dass mindestens ein Bestandteil des Produkts durch die Umfassung abgegeben werden kann. Vorzugsweise wird die Vorrichtung für die orale Verabreichung eines Produkts bei Tieren, insbesondere bei Huftieren bzw. Pferden verwendet. Ein Vorteil der Erfindung ist, dass durch die Gestaltung der Umfassung wie z.B. Farbe, Form, usw. der Spieltrieb eines Tieres angeregt werden kann. Tiere, wie z.B. Pferde, benutzen ihr Maul als Werkzeug insbesondere als Ersatz für ein Greifwerkzeug, um zu spielen, wobei beim Ergreifen der erfindungsgemäßen Verabreichungsvorrichtung mit dem Maul automatisch Speichel auf die erfindungsgemäße Vorrichtung abgegeben wird. Durch die flüssigkeitsdurchlässige Umfassung dringt Speichel in deren Inneres, wobei das darin befindliche Produkt oder wenigstens ein Bestandteil des Produkts durch den Speichel gelöst oder aus dem Produkt herausgelöst wird und durch die Umfassung an eine Außenseite der Umfassung gelangen kann. Von dort kann das Speichel-Produkt-Gemisch oder das Speichel-Produktbestandteil-Gemisch beim nächsten Ergreifen der Vorrichtung mit dem Maul auf dieses zu einer Verabreichung übertragen werden.

Das zu verabreichende Produkt kann von der Umfassung selbst aufgenommen werden, z.B. durch die Ausbildung der Umfassung mit einem porigen oder schwammartigen Material. Ebenso wäre eine Beschichtung oder ein Überzug aus so einem Material auf ein die Umfassung bildendes Grundmaterial denkbar.

Vorzugsweise ist das Produkt von der Umfassung wenigstens teilweise umgeben. Das zu verabreichende Produkt kann fest oder flüssig innerhalb der Umfassung aufgenommen sein.

Das Produkt besteht im Wesentlichen aus wenigstens einem Produktbestandteil. Ein Produktbestandteil kann wenigstens ein festes Teilchen, z.B. ein partikelartiges Teilchen, sein, das als festes Teilchen aus dem Produkt herauslösbar sein kann, um ein Flüssigkeits-Partikel-Gemisch, insbesondere eine Suspension, zu bilden. Die Teilchen können dabei von einer mikroskopischen Größe bis zu einer dem Produkt entsprechenden Größenordnung variieren. Ein Produktbestandteil kann aber auch mindestens ein Inhaltsstoff sein, der homogen, also in Molekülgröße aus dem Produkt herauslösbar ist. Es ist ferner denkbar, dass das wenigstens eine, einen Produktbestandteil bildende feste Teilchen aus wenigstens einem Inhaltsstoff gebildet ist.

Das Produkt oder der Produktbestandteil können ein Medikament und/oder Nahrungsergänzungsmittel, insbesondere Vitamine, Mineralien oder Spurenelemente sein. Das Produkt oder der Produktbestandteil können auch ein Aroma, ein Geruchsstoff oder ein Geschmacksstoff sein, welche eine besondere Lockwirkung auf die für die Verabreichung vorgesehene Tierart oder auf ein individuelles Tier ausüben. Mindestens ein Produktbestandteil ist mit einer Verdauungsflüssigkeit, insbesondere Speichel, von dem Produkt ablösbar oder in dieser löslich. Da Speichel eine auf wasserbasierende Flüssigkeit ist, sind die Produktbestandteile oder das Produkt bevorzugt wasserlöslich oder löslich in wässrigen Flüssigkeiten.

Vorzugsweise ist das sich innerhalb der Umfassung befindliche Produkt fest. Das feste, in einer Verdauungsflüssigkeit und/oder in einer wässrigen Flüssigkeit, insbesondere Speichel, lösliche Produkt weist eine Mindestgröße auf, die größer ist als ein Durchtritts- oder Abgabeelement der Umfassung, die die Abgabe der Bestandteile des Produkts durch die Umfassung erlaubt. Somit wird unabhängig von der Lage der Umfassung ein Herausfallen des Produkts aus dem Inneren der Umfassung verhindert. Selbstverständlich ist dies nur solange gewährleistet, bis das Produkt soweit aufgelöst ist, bis es durch ein Durchtritts- oder Abgabeelement der Umfassung an eine Umgebung der Vorrichtung abgegeben werden kann. Das Produkt kann durch eine von außen in die Vorrichtung dringende Flüssigkeit gelöst werden, so dass Produktbestandteile in flüssiger Form an die Umgebung abgegeben werden. Unter einer flüssigen Form wird eine homogene Lösung und/oder partikelartige, herausgelöste Teile des Produkts oder der Produktbestandteile verstanden. Es ist ebenso vorstellbar, dass durch das feste Produkt feste Bestandteile abgegeben werden, die durch ein Durchtritts- oder Abgabeelement der Umfassung, insbesondere durch eine Öffnung der Umfassung an die Umgebung abgegeben werden können.

Vorzugsweise ist das Produkt ein Nahrungsergänzungsmittel-Extrudat oder ein sogenannter Leckstein. Besonders bevorzugt ist das Produkt ein mit einer Vitamin-Ummantelung zumindest teilweise überzogener Produktbestandteil aus einem Nahrungsergänzungsmittel-Extrudat. Jedoch ist es auch vorstellbar, dass das Produkt oder ein Produktbestandteil von einem oder mehreren zusätzlichen Produktbestandteilen ummantelt ist. Vorzugsweise ist die einen Produktbestandteil bildende Ummantelung schichtweise auf einen anderen Produktbestandteil aufgebracht, wobei jeweils eine Schicht aus einem oder mehreren Produktbestandteilen gebildet sein kann. Daraus ergibt sich der Vorteil, dass je nach Auflösungszustand des Produkts ein anderer Produktbestandteil vom Produkt gelöst und somit verabreicht werden kann.

In einer bevorzugten Ausführungsform ist das Produkt aus einer Vielzahl von partikelartigen Produktbestandteilen gebildet. Ein partikelartiger Produktbestandteil kann im Wesentlichen wie ein Produkt aufgebaut sein, wobei die Größe eines partikelartigen Produktbestandteils bevorzugt kleiner ist als die mindestens eine ein Durchtritts- oder Abgabeelement bildende Öffnung der Umfassung, so dass die Produktbestandteile durch die Umfassung an die Umgebung abgegeben werden können, ohne dass sie aufgelöst werden müssen, was ebenfalls möglich wäre. Die partikelartigen Produktbestandteile werden somit z.B. in fester Form abgegeben.

Die Produktbestandteile können wie das Produkt schichtweise aufgebaut sein. Bevorzugt sind die partikelartigen Produktbestandteile mit einem Bindemittel zu einem Produkt zusammengefügt. Dieses Bindemittel ist vorzugsweise wasserlöslich, insbesondere speichellöslich. Durch den Kontakt mit Speichel wird das Bindemittel, das sich zwischen den Produktbestandteilen befindet und diese zusammenhaften läßt, herausgelöst, so dass diese abgegeben werden können. Die nicht oder nur teilweise aufgelösten partikelartigen Produktbestandteile können in das Maul gelangen und z.B. auf der Zunge des Tieres kleben bleiben, so dass diese zerkaut oder unzerkaut geschluckt werden können.

Vorzugweise ist das Bindemittel auf Stärkebasis oder auf Gelatinebasis oder auf Zuckerbasis aufgebaut, aber nicht darauf beschränkt. Auch das Bindemittel bildet einen Produktbestandteil und kann wenigstens einen weiteren Produktbestandteil beinhalten. In einer weiteren Ausführungsform können die partikelartigen Produktbestandteile so beschichtet sein, dass sie durch den Speichel des Tieres nicht oder nur schwach angelöst, jedoch im Magen durch die Verdauungsflüssigkeit gelöst werden.

In einer anderen Ausführungsform ist das Produkt vorzugsweise flüssig. Ein flüssiges Produkt kann eine aus einem flüssigen Produktbestandteil und mindestens einem festen Produktbestandteil gebildete Mischung sein. Ferner kann ein flüssiges Produkt auch eine aus einem flüssigen Produktbestandteil und mindestens einem weiteren flüssigen Produktbestandteil gebildete Mischung sein. Die flüssigen Produktbestandteile können homogen oder heterogen gemischt sein. Eine homogene Mischung ist z.B. ein Gemisch aus wasserlöslichen Aromastoffen mit Wasser. Eine heterogene Mischung ist ein Gemisch aus Produktbestandteilen, die nicht oder nur teilweise ineinander löslich sind, wie z.B. Wasser und ÖI. Das flüssige Produkt kann daher eine Suspension oder eine Emulsion oder eine Lösung sein.

Das Produkt- oder Abgabeelement der Umfassung, die die Abgabe des flüssigen Produkts erlaubt, kann z.B. mindestens eine Öffnung, vorzugsweise eine Vielzahl von Öffnungen sein, die an eine Viskosität des Produkts, des Produkt-Speichel-Gemischs oder des Produktbestandteil-Speichel-Gemischs angepasst sind. Vorteilhaft nimmt die Größe der Öffnungen mit steigender Viskosität zu und umgekehrt.

Das flüssige Produkt kann beispielsweise in oder von einem saugfähigen Material, das sich innerhalb der Umfassung befindet, aufgenommen werden. Durch das Eindringen von wässriger Flüssigkeit oder Speichel in die Umfassung wird das flüssige Produkt aus dem saugfähigen Material herausgelöst und abgegeben. Ein saugfähiges Material kann z.B. ein Schwamm oder ein offenporiger Schaum sein. Es ist ferner vorstellbar, dass die Umfassung aus einem saugfähigen Material gebildet oder zumindest teilweise mit einem saugfähigen Material überzogen ist, so dass das flüssige Produkt im Wesentlichen von der Umfassung aufgenommen werden kann. Wenn das flüssige Produkt verbraucht ist, kann die Vorrichtung, insbesondere das saugfähige Material, durch einfaches Eintunken in ein Gefäß mit einem flüssigen Produkt für eine weitere Verabreichung präpariert werden.

Die Umfassung ist bissfest ausgestaltet. Ebenso vorteilhaft ist die Umfassung verdauungsflüssigkeitsresistent, insbesondere speichelresistent über eine geeignete Auswahl der Materialien auszuführen. Die Bissfestigkeit kann dadurch erreicht werden, dass die Umfassung so konstruiert ist, dass sie durch die Kraft eines Bisses nicht zerstört werden kann. In einer Ausführungsform ist dies möglich durch die entsprechend stabile Konstruktion der Umfassung, wobei die Umfassung in diesem Falle in der Regel nur eine geringe elastische Verformbarkeit aufweist. In einer anderen Ausführungsform ist die Umfassung so konstruiert, dass diese stark verformbar ist, so dass sie durch einen Biss nicht zerstört werden kann. Für eine bissfeste Umfassung kommen insbesondere Materialien wie Metalle, Kunststoffe, Gummi, Kautschuk, Leder, oder verschiedenste Gewebearten auf Basis von Naturfasern oder Kunstfasern in Frage. Besonders bevorzugt wird die Umfassung zumindest zum Teil aus bissfestem Spritzkunststoff und/oder aus einem Gewebe hergestellt. Prinzipiell ist die Kombination verschiedener oder gleicher Materialien möglich, um eine Umfassung zu bilden.

Die Umfassung der Vorrichtung weist wenigstens eine Öffnung auf, durch die die flüssig oder fest von dem Produkt abgelösten Produktbestandteile hindurchtreten können. Dies setzt voraus, dass die Öffnungen kleiner sind als das Produkt, das sich innerhalb der Umfassung befindet. Vorteilhaft sind in der Umfassung mehrere Öffnungen so angeordnet, dass Stege gebildet werden. Diese Öffnungen oder auch die Stege können im Wesentlichen eine Form eines Zweiecks oder eines Dreiecks oder eines Vierecks oder eines Vielecks oder eine runde Form oder eine Kombination dieser Formen aufweisen. Ebenso sind schlitzartige Öffnungen in der Umfassung vorstellbar. Aus Stabilitätsgründen ist es sinnvoll, dass die Öffnungen jeweils an ihren Ecken abgerundet sind, um Kerbwirkungen zu verhindern. Die Öffnungen sind vorzugsweise so angeordnet, dass sie eine gitterartige Struktur der Umfassung erzeugen. Die Umfassung kann im Wesentlichen einer Oberfläche eines dreidimensionalen Körpers entsprechen. Die Form des dreidimensionalen Körpers ist nicht beschränkt. Insbesondere ist die Umfassung eine mit einer Vielzahl von Öffnungen versehenen Oberfläche deren Struktur, abgesehen von den Öffnungen, geschlossen ist, um das Produkt im Inneren der Umfassung halten zu können.

Vorzugsweise entspricht die Umfassung einer Kugeloberfläche. Unter einer Kugeloberfläche sind auch von der Geometrie abweichende Oberflächen, wie z.B. eine eierförmige Oberfläche zu verstehen. Zur Förderung des Spieltriebs sind Körper mit runden Oberflächen von Vorteil. Die gitterartige Struktur der Umfassung einer Kugel kann zum einen durch Längenstege, die von einem Pol zum anderen Pol der Kugeloberfläche verlaufen, gebildet sein. Die sich daraus ergebende Öffnung der Umfassung würde in diesem Fall in etwa einem Kugelzweieck entsprechen. Ein Kugelzweieck entspricht der Schnittmenge zweier Kreise, insbesondere zweier Großkreise auf einer Kugeloberfläche. Die Ecken des Kugelzweiecks müssen nicht unbedingt in den Polen sitzen. An den Polen der Kugeloberfläche können die Stege zusammenlaufen, so dass dort jeweils ein Polknoten gebildet sein kann. Grundsätzlich können die Stege auch an anderen Knoten als den Polknoten zusammenlaufen.

Die Längenstege können durch Breitenstege verbunden sein, so dass sich daraus dreieckige oder viereckige Öffnungen ergeben. An den Stellen, an denen die Breitenstege mit den Längenstegen verbunden sind, sind Knoten gebildet. Die zwischen den Knoten verlaufenden Breitenstege und/oder Längsstege können so ausgebildet sein, dass sie im Wesentlichen nicht elastisch verformbar sind. Vorteilhaft sind die Breitenstege und/oder die Längenstege elastisch stark verformbar ausgeführt, so dass eine elastische Verformung der Umfassung möglich ist, ohne die Kugel dabei zu zerstören. Elastisch verformbar bedeutet, dass die Umfassung zerstörungsfrei stark verformbar ist und anschließend an die Verformung in ihre ursprüngliche Form zurückkehren oder zurückfedern kann.

In einer anderen Ausführungsform kann die.Umfassung plastisch verformbar sein. Die Verformung der Umfassung könnte also auch dauerhaft bestehen.

Eine weitere Möglichkeit wäre es, die Umfassung oder einen Teil der Umfassung aus einem Material, insbesondere Kunststoff, mit einem Rückerinnerungsvermögen herzustellen. Dabei kann die Umfassung zunächst plastisch verformt werden, wobei sich diese, z.B. in Abhängigkeit von der Zeit, und/oder der Temperatur und/oder der Feuchtigkeit, in etwa in ihre ursprüngliche Form zurückverformt, also rückerinnert.

In einer anderen Ausführungsform ist die Umfassung der Vorrichtung kugeloberflächenförmig gebildet, die zumindest teilweise das Produkt umfasst. Die Umfassung kann beispielsweise die Form einer Kugelteiloberfläche, insbesondere eines Kugelzweiecks haben. Bevorzugt ist, dass dieses Kugelzweieck jeweils Öffnungen enthält. Die Anordnung mehrerer Kugelzweiecke in Umfangrichtung entlang eines Äquators der Kugel ist durchaus vorstellbar, ebenso wie die Möglichkeit, dass die Kugelzweiecke durch Breitenstege verbunden sein können.

Vorzugsweise ist das Produkt der Vorrichtung austauschbar oder nachfüllbar. Dazu kann die Umfassung eine Einrichtung umfassen, durch die ein neues Produkt in die Umfassung einbringbar ist. In einer einteiligen Ausgestaltung der Umfassung kann dies über eine Öffnung in der Umfassung gelöst werden. Durch elastische oder plastische Verformung kann die Öffnung soweit aufgeweitet werden, bis das neu in die Umfassung einzubringende Produkt durch die Öffnung der Umfassung einbringbar ist. Nach dem Einbringen des Produkts wird die Öffnung durch die elastische oder plastische Rückverformung soweit verschlossen, bis das Produkt nicht mehr aus dem Inneren der Umfassung in die Umgebung austreten kann. So eine Öffnung stellt in einer bevorzugten Ausführungsform der Umfassung als Kugeloberfläche eine kugelzweieckförmige Öffnung dar. Beim Aufweiten würden sich die Eckenwinkel der kugelzweieckförmigen Öffnung vergrößern.

Vorzugsweise ist die Einrichtung, durch die ein neuen Produkt in die Umfassung einbringbar ist, ein Öffnungsmechanismus. Dieser Öffnungsmechanismus kann eine Klappe sein, die z.B. über Scharniere, die ggf. federnd ausgebildet sein können, öffenbar ist.

In einer bevorzugten Ausführungsform ist die Umfassung zwei- oder mehrteilig ausgebildet. Die zwei oder mehreren Teile der Umfassung können mit geeigneten Verbindungselementen lösbar zusammengefügt werden. Die zwei oder mehreren Teile der Umfassung können besonders vorteilhaft miteinander verschraubt werden, wozu mindestens zwei Teile der Umfassung je ein mit dem anderen Teil der Umfassung ein zusammenwirkendes Gewinde aufweisen. In einer weiteren Ausführungsform können die zwei oder mehreren Gehäuseteile mittels Steckverbindung oder Schnappverschlüssen lösbar verbunden sein.

In einer weiteren Ausführungsform kann die Umfassung ebenfalls zwei- oder mehrteilig gebildet sein, wobei die zwei oder mehreren Teile der Umfassung nach dem Einbringen des Produkts unlösbar miteinander verbunden sind. Bevorzugt sind Schweiß- oder Klebeverbindungen. Bei dem Zusammenfügen der Gehäuseteile durch Schweißen wird vorzugsweise Ultraschallschweißen, Reibschweißen oder Heißluftschweißen verwendet, wobei die Fügeverfahren nicht auf diese Schweißverfahren beschränkt sind.

Vorzugsweise ist die Vorrichtung zur oralen Verabreichung eines Produkts, insbesondere durch ihre Größe, so dimensioniert, dass die Vorrichtung nicht schluckbar ist.

Die Erfindung betrifft ferner ein Verfahren zum bevorzugt dosierten oder über einen Zeitraum verteilten Abgeben eines Produkts in eine oral aufnehmbare Darreichungsform, wobei Speichel auf eine Umfassung, in welcher das Produkt angeordnet ist, aufgebracht wird und mindestens ein Bestandteils des Produkts durch die Umfassung hindurch abgegeben wird, nachdem der Speichel in die Umfassung eingedrungen ist und den mindestens einen Bestandteil des Produkts gelöst hat.

Die vorliegende Erfindung wurde anhand mehrerer Ausführungsbeispiele erläutert. Die einzelnen Einrichtungen einer erfindungsgemäßen Vorrichtung können auch sinnvoll miteinander kombiniert werden. Die Erfindung wird anhand eines Ausführungsbeispiels mit Hilfe der Figuren erläutert. Es zeigen:
- Figur 1: eine erfindungsgemäße Vorrichtung mit einer Umfassung und einem Produkt,
- Figur 2: eine Schnittansicht durch ein Produkt in einer ersten Ausführungsform,
- Figur 3: eine Schnittansicht durch ein Produkt in einer weiteren Ausführungsform,
- Figur 4: einen Öffnungsmechanismus der Umfassung mit einem Gewinde und
- Figur 5: einen Öffnungsmechanismus der Umfassung mit Rastelementen.

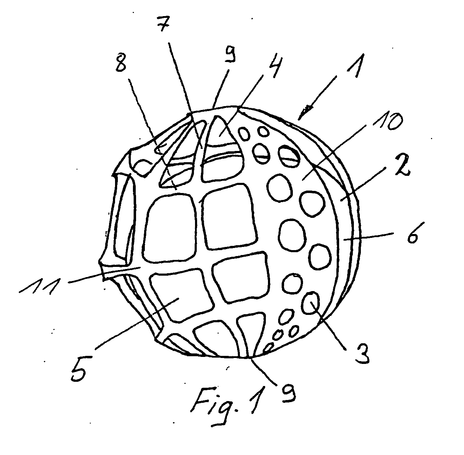

Figur 1 zeigt eine erfindungsgemäße Vorrichtung zur oralen Verabreichung eines Produkts 2 mit einer bissfesten Umfassung 1. Innerhalb der Umfassung 1 befindet sich ein Produkt 2. Die Umfassung 1 weist mehrere Öffnungen 3; 4; 5; 6 auf, so dass mindestens ein Bestandteil des Produkts 2 durch die Umfassung 1 an die Umgebung der Vorrichtung abgegeben werden kann.

Die in Figur 1 dargestellte Ausführungsform der Umfassung 1 weist eine Kombination an Öffnungen 3; 4; 5; 6 unterschiedlicher Form und Größe auf. Dreieckige Öffnungen 4 und viereckige Öffnungen 5 sind so aneinander angeordnet, dass der dazwischen liegende Teile der Umfassung Stege 7; 8, insbesondere Längenstege 7 und/oder Breitenstege 8 gebildet werden. Die Längenstege 7 verbinden im Wesentlichen die beiden Pole der kugelförmigen Umfassung 1. Mehrere der Längenstege 7, die in den Polen zusammenlaufen bilden an jedem Pol einen Polknoten 9. Quer zu den Längenstegen 7 sind durch die Anordnung der Öffnungen 3; 4; 5; 6 Breitenstege 8 gebildet, die einige der Längenstege 7 verbinden. An der Stelle, an der die Längenstege 7 und die Breitenstege 8 aufeinander treffen, wird ein Knoten 11 gebildet. Die fensterartigen Öffnungen 4; 5, die die Stege 7; 8 bilden, sind an ihren Ecken abgerundet. Durch die Abrundung der Ecken erhalten die Knoten 11 und die Polknoten 9 eine höhere Stabilität, da Kerbwirkungen verringert werden. Die Polknoten 9 müssen nicht an den Polen der Kugel liegen, sondern können beliebige andere Positionen auf der Kugeloberfläche einnehmen.

Ferner ist eine schlitzartige Öffnung 6 gebildet, die sich in etwa in der Form eines Kugelzweiecks von dem einen Pol oder Polknoten 9 zu dem anderen erstreckt. Die Ecken des Kugelzweiecks weisen eine abgerundete Form auf, um die bereits erwähnten Kerbwirkungen zu verringern. Die Flanken der kugelzweieckförmigen Öffnungen 6 werden gebildet aus Bereichen der Umfassung 10, die ebenfalls eine in etwa kugelzweieckförmige Form aufweisen. Die kugelzweieckförmigen Bereiche 10 der Umfassung 1 weisen mehrere in etwa kreisförmige Öffnungen 3 auf. Die die schlitzförmige Öffnung 6 eingrenzenden Bereiche 10 weisen daher einen höheren Widerstand gegen Verformung auf, als die Bereiche mit den Längsstegen 7 und den Breitenstegen 8.

Zum Einbringen eines neuen Produkts dient die kugelzweieckförmige Öffnung 6. Die Öffnung 6 kann durch Auseinanderdrücken der die Flanken bildenden Bereiche 10 aufgeweitet werden, so dass das einzubringende Produkt 2 in die Umfassung 1 einbringbar ist. Wegen des geringeren Widerstands, insbesondere der Breitenstege 8 gegen Verformung, ermöglicht das Auseinanderdrücken der Bereiche 10 die Aufweitung der Öffnung 6 durch Vergrößerung eines Eckenwinkels des Zweiecks. Die Umfassung 1 kann durch einen elastisch verformbaren Spritzkunststoff hergestellt sein.

Das Produkt 2 ist so dimensioniert, dass man es in einem nicht aufgeweiteten Zustand der Umfassung 1 nicht durch deren Öffnungen 3; 4; 5; 6 bringen kann. Es ist lediglich möglich, dass die homogen gelösten oder als partikelartige Teilchen herausgelösten Bestandteile 2a; 2b; 30; 31 des Produkts 2 durch die Öffnungen 3; 4; 5; 6 hindurchtreten können. Wenn das Produkt 2 infolge hinreichender Ablösung von Produktbestandteilen 2a; 2b; 30; 31 seine äußere Dimension, insbesondere die Größe, verringert hat, kann der Rest des Produkts 2 selbstverständlich aus einer der Öffnungen 3; 4; 5; 6 austreten.

Figur 2 zeigt eine Schnittdarstellung eines Produkts 3. Das Produkt 2 besteht aus einem Produktkern 2a und mindestens einer Ummantelung 2b, die jeweils Produktbestandteile sind, wobei die Ummantelung 2b den Produktkern abweichend von der Figur wenigstens teilweise überzieht oder ummantelt. Der Produktkern 2a und die mindestens eine Ummantelung 2b kann eine Kombination aus Medikamenten, Nahrungsergänzungsmittel, insbesondere Vitaminen, Mineralien, Spurenelementen, Aroma-, Geruchs- oder Geschmacksstoffen sein. Es ist möglich, dass der Produktkern 2a und die Ummantelung 2b bereits selbst Mischungen aus den genannten unterschiedlichen Stoffen sein können. Bevorzugt ist die mindestens eine Ummantelung 2b eine Vitamin-Ummantelung.

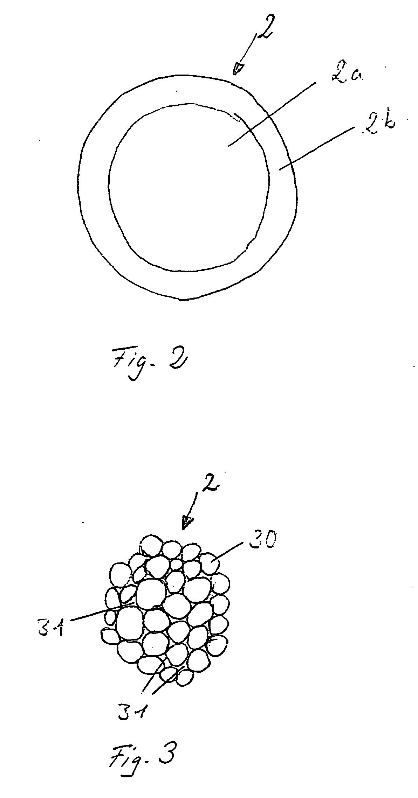

Figur 3 zeigt eine Schnittdarstellung durch ein aus mehreren Produktbestandteilen 30 gebildetes Produkt 2. Die Produktbestandteile 30 können aus einem Inhaltsstoff oder aus einer Kombination der genannten Inhaltsstoffe bestehen. Es ist auch möglich, dass Produktbestandteile 30 im Wesentlichen dem Produkt 2 gemäß Figur 2 entsprechen können. Die partikelartigen Produktbestandteile 30 weisen dann vorteilhafterweise eine geringere Größe als das Produkt 2 gemäß Figur 2 auf, da eine Vielzahl dieser Produktbestandteile 30 aneinandergefügt sind. Die Produktbestandteile 30 werden mit Hilfe eines Bindemittels 31, das ebenfalls als ein Produktbestandteil angesehen werden kann, zusammengefügt. Das Bindemittel 31 ist vorzugsweise wasserlöslich und/oder speichellöslich. Dadurch werden einzelne Produktbestandteile 30 durch Einwirkung des Speichels auf das Bindemittel 31 aus dem Produkt 2 herausgelöst und dringen durch die Öffnungen 3; 4; 5; 6 der Umfassung 1 an die Umgebung der Vorrichtung, wo sie durch das Tier oral aufgenommen werden können.

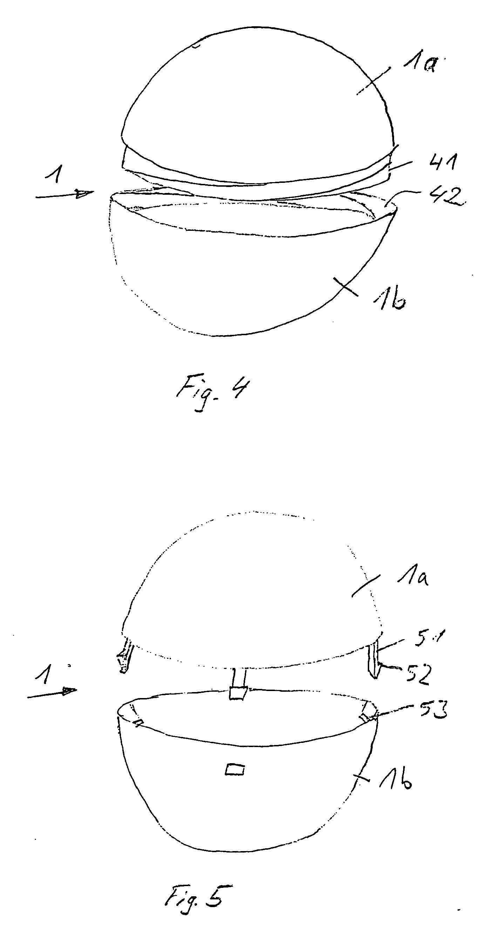

Figur 4 zeigt einen Öffnungsmechanismus für eine zweiteilige Umfassung 1. Lediglich zur Einfachheit der Darstellung wurde die mindestens eine Öffnung für die Abgabe der Produktbestandteile weggelassen. Der Öffnungsmechanismus ist in dieser Ausführungsform eine Gewindeverbindung. Ein erster Teil 1a der kugelförmigen Umfassung weist in etwa in einem Äquatorialbereich ein Gewinde 41 auf, das mit einem Gewinde 42, das in einem zweiten Teil der Umfassung 1 b in einen Eingriff gebracht werden kann. Das Gewinde 41; 42 kann eingängig oder mehrgängig ausgebildet sein. Es ist durchaus möglich, anstatt eines Gewindes 41; 42 einen Bajonettverschluss zu verwenden.

Zum Nachfüllen eines Produkts werden die beiden Teile der Umfassung 1a, 1b voneinander gelöst, das Produkt eingelegt und anschließend wieder in einen Eingriff gebracht.

Figur 5 zeigt ebenfalls einen Öffnungsmechanismus für eine zweiteilig ausgebildete Umfassung 1, bei der ebenfalls lediglich zu Zwecken der Darstellung die mindestens eine Öffnung weggelassen wurde. Ein erstes Gehäuseteil 1a weist mindestens ein Rastelement 51 auf. An dem abstehenden Ende des Rastelements 51 ist eine Rastnase 52 ausgebildet. Das zweite Gehäuseteil 1b weist als Gegenstück zum ersten Gehäuseteil 1 a mindestens eine Öffnung für das Rastelement 51 des ersten Gehäuseteils 1 a auf. Die Öffnungen 53 sind so dimensioniert, dass die Rastnase 52 in die Öffnung 53 einrasten kann. Zum Öffnen der Umfassung 1 müssen die Rastnasen 52 aus dem Eingriff mit der Rastöffnung 53 gebracht werden.

## Patentansprüche

1. Vorrichtung zur oralen Verabreichung eines Produkts (2) mit:
einer bissfesten Umfassung (1),
einem Produkt (2), das sich innerhalb der Umfassung (1) befindet, wobei die Umfassung (1) so ausgebildet ist, dass mindestens ein Produktbestandteil (2a; 2b; 30; 31) durch die Umfassung (1) abgegeben werden kann,
**dadurch gekennzeichnet, dass** mindestens ein Produktbestandteil (2a; 2b; 30; 31) durch eine Verdauungsflüssigkeit, insbesondere Speichel, löslich ist.

2. Vorrichtung nach einem der vorhergehenden Ansprüche, **dadurch gekennzeichnet, dass** das sich innerhalb der Umfassung (1) befindliche Produkt (2) fest ist.

3. Vorrichtung nach einem der vorhergehenden Ansprüche, **dadurch gekennzeichnet, dass** mindestens ein Produktbestandteil (2a; 2b; 30; 31) aus dem Produkt (2) durch eine Verdauungsflüssigkeit, insbesondere Speichel, löslich ist.

4. Vorrichtung nach einem der vorhergehenden Ansprüche, **dadurch gekennzeichnet, dass** die Umfassung (1) wenigstens eine Öffnung (3; 4; 5; 6) aufweist, durch das mindestens ein Bestandteil des Produkts (2) abgegeben werden kann.

5. Vorrichtung nach einem der vorhergehenden Ansprüche, **dadurch gekennzeichnet, dass** mehrere Öffnungen (3; 4; 5; 6) so angeordnet sind, dass zwischen den Öffnungen Stege (7; 8) gebildet werden.

6. Vorrichtung nach einem der vorhergehenden Ansprüche, **dadurch gekennzeichnet, dass** mehrere Öffnungen (3; 4; 5; 6) im Wesentlichen eine Form eines Zweiecks oder eines Dreiecks oder eines Vierecks oder eines Vielecks oder eine runde Form oder eine Kombination dieser Formen aufweisen.

7. Vorrichtung nach einem der vorhergehenden Ansprüche, **dadurch gekennzeichnet, dass** die Umfassung (1) eine Einrichtung umfasst, durch die ein neues Produkt (2) in die Umfassung (1) einbringbar ist.

8. Vorrichtung nach dem vorhergehenden Anspruch, **dadurch gekennzeichnet, dass** die Einrichtung ein Öffnungsmechanismus ist.

9. Vorrichtung nach einem der vorhergehenden Ansprüche, **dadurch gekennzeichnet, dass** die Umfassung (1) elastisch verformbar ist.

10. Vorrichtung nach einem der vorhergehenden Ansprüche, **dadurch gekennzeichnet, dass** die Umfassung (1) zumindest zum Teil aus Spritzkunststoff und/oder einem Gewebe hergestellt ist.

11. Verfahren zum Abgeben eines in einer Umfassung (1) vorgesehenen Produkts (2) in eine oral aufnehmbare Darreichungsform, umfassend:
a) Aufbringen von Speichel auf die Umfassung (1),
b) Abgabe mindestens eines Bestandteils des Produkts (2) aus der Umfassung (1) nachdem der Speichel in die Umfassung (1) eingedrungen ist und mindestens einen Bestandteil des Produkts (2) gelöst oder abgelöst hat.

## Claims

1. A device for orally administering a product (2), comprising:
a bite-resistant enclosing structure (1);
a product (2) situated within the enclosing structure (1), wherein the enclosing structure (1) is designed such that at least one product constituent (2a; 2b; 30; 31) can be dispensed through the enclosing structure (1),
**characterised in that** at least one product constituent (2a; 2b; 30; 31) can be dissolved by a digestive fluid, in particular saliva.

2. The device according to the preceding claim, **characterised in that** the product (2) situated within the enclosing structure (1) is solid.

3. The device according to any one of the preceding claims, **characterised in that** at least one product constituent (2a; 2b; 30; 31) can be dissolved out of the product (2) by a digestive fluid, in particular saliva.

4. The device according to any one of the preceding claims, **characterised in that** the enclosing structure (1) comprises at least one opening (3; 4; 5; 6) through which at least one constituent of the product (2) can be dispensed.

5. The device according to any one of the preceding claims, **characterised in that** a number of openings (3; 4; 5; 6) are arranged such that stays (7; 8) are formed between the openings.

6. The device according to any one of the preceding claims, **characterised in that** a number of openings (3; 4; 5; 6) substantially exhibit the shape of a lune or a triangle or a quadrilateral or a polygon or a round shape or a combination of these shapes.

7. The device according to any one of the preceding claims, **characterised in that** the enclosing structure (1) comprises a means by which a new product (2) can be introduced into the enclosing structure (1).

8. The device according to the preceding claim, **characterised in that** the means is an opening mechanism.

9. The device according to any one of the preceding claims, **characterised in that** the enclosing structure (1) can be elastically deformed.

10. The device according to any one of the preceding claims, **characterised in that** the enclosing structure (1) is at least partially produced from injected plastic and/or a fabric.

11. A method for dispensing a product (2), provided in an enclosing structure (1), in an administering form which can be taken orally, comprising the steps of:
a) applying saliva to the enclosing structure (1);
b) dispensing at least one constituent of the product (2) from the enclosing structure (1), once the saliva has penetrated into the enclosing structure (1) and dissolved or dissolved away at least one constituent of the product (2).

## Revendications

1. Dispositif pour l'administration orale d'un produit (2) avec :
une enveloppe (1) résistant à la morsure,
un produit (2), qui se trouve à l'intérieur de l'enveloppe (1), où l'enveloppe (1) est formée de sorte qu'au moins un constituant (2a ; 2b ; 30 ; 31) du produit peut être cédé par l'enveloppe (1), **caractérisé en ce qu'**au moins un constituant (2a ; 2b ; 30 ; 31) du produit est soluble dans un suc digestif, en particulier la salive.

2. Dispositif selon l'une des revendications précédentes, **caractérisé en ce que** le produit (2) se trouvant à l'intérieur de l'enveloppe (1) est solide.

3. Dispositif selon l'une des revendications précédentes, **caractérisé en ce qu'**au moins un constituant (2a ; 2b ; 30 ; 31) du produit (2) est soluble dans un suc digestif, en particulier la salive.

4. Dispositif selon l'une des revendications précédentes, **caractérisé en ce que** l'enveloppe (1) présente au moins une ouverture (3 ; 4 ; 5 ; 6), par laquelle au moins un constituant du produit (2) peut être cédé.

5. Dispositif selon l'une des revendications précédentes, **caractérisé en ce que** plusieurs ouvertures (3 ; 4 ; 5 ; 6) sont agencées de sorte qu'entre les ouvertures, des traverses (7 ; 8) sont formées.

6. Dispositif selon l'une des revendications précédentes, **caractérisé en ce que** plusieurs ouvertures (3 ; 4 ; 5 ; 6) présentent essentiellement, une forme de fuseau, une forme triangulaire ou quadrangulaire ou polygonale ou une forme ronde ou une combinaison de ces formes.

7. Dispositif selon l'une des revendications précédentes, **caractérisé en ce que** l'enveloppe (1) comprend un arrangement, par lequel un nouveau produit (2) peut être inséré dans l'enveloppe (1).

8. Dispositif selon l'une des revendications précédentes, **caractérisé en ce que** l'arrangement est un mécanisme d'ouverture.

9. Dispositif selon l'une des revendications précédentes, **caractérisé en ce que** l'enveloppe (1) est déformable de manière élastique.

10. Dispositif selon l'une des revendications précédentes, **caractérisé en ce que** l'enveloppe (1) est préparée au moins en partie, à partir d'une matière plastique pour injection et/ou d'un tissu.

11. Procédé pour le transfert d'un produit (2) prévu dans une enveloppe (1) dans une forme d'administration assimilable oralement, comprenant :
a) l'application de salive sur l'enveloppe (1),
b) le transfert d'au moins un constituant du produit (2) hors de l'enveloppe (1) après que la salive a pénétré dans l'enveloppe (1) et qu'au moins un constituant du produit (2) s'est dissous.
